(19) **Europäisches Patentamt**

**European Patent Office**

**Office européen des brevets**

(11) **EP 1 693 724 A2**

(12) **EUROPÄISCHE PATENTANMELDUNG**

(43) Veröffentlichungstag:
23.08.2006 Patentblatt 2006/34

(51) Int Cl.:
*G05B 19/042* (2006.01)   *G01D 21/00* (2006.01)

(21) Anmeldenummer: 06110134.1

(22) Anmeldetag: 20.02.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **22.02.2005 DE 102005008050**

(71) Anmelder: **SIEMENS AKTIENGESELLSCHAFT**
**80333 München (DE)**

(72) Erfinder:
• **Griepentrog, Gerd Dr.**
**91468, Gutenstetten (DE)**
• **Hüttinger, Simon Dr.**
**91056, Erlangen (DE)**
• **Maier, Reinhard Dr.**
**91074, Herzogenaurach (DE)**
• **Meyer, Martin**
**90425, Nürnberg (DE)**
• **Schierling, Hubert Dr.**
**91052, Erlangen (DE)**
• **Schmidt, Richard**
**91083, Baiersdorf (DE)**

(54) **Verfahren zum Austausch von Informationsdaten zwischen einem elektrischen Verbraucher und einem Betriebsmittel sowie Verbrauchererkennungseinheit**

(57) Verfahren zum Austausch von Informationsdaten zwischen einem elektrischen Verbraucher und einem Betriebsmittel sowie Verbrauchererkennungseinheit

Die Erfindung betrifft ein Verfahren zum Austausch von Informationsdaten zwischen einem elektrischen Verbraucher und einem zwischen dem Verbraucher und dem elektrischen Versorgungsnetz angeordneten Betriebsmittel, wobei der Verbraucher eine Verbrauchererkennungseinheit enthält, die mindestens ein digitales Typenschild umfasst, das in einem elektronisch lesbaren Speichermittel gespeichert ist, und die über eine Koppelimpedanz an die Versorgungsleitungen zwischen Verbraucher und elektrischem Versorgungsnetz angekoppelt ist, über die die Daten von einem Sender in der Verbrauchererkennungseinheit nach Initialisierung durch das Betriebsmittel mittels einer über der Netzfrequenz liegenden Trägerfrequenz auf die Versorgungsleitungen aufmoduliert werden.

Es ist vorgesehen, dass während einer Verbrauchererkennungsphase zu Beginn einer jeweiligen Inbetriebnahme des Verbrauchers zunächst ein in der Verbrauchererkennungseinheit angeordnetes, Energie speicherndes Netzteil geladen wird, nach erfolgtem Laden des Netzteils in der Verbrauchererkennungseinheit gespeicherte Daten mit einem Datenburst an das zwischen Verbraucher und elektrischem Versorgungsnetz liegende Betriebsmittel übertragen werden, wobei die Übertragung mehrfach wiederholt wird, der Datenburst aus einer Präambel und den zu übertragenden Verbraucherdaten besteht und die Übertragung von einem Steuerteil der Verbrauchererkennungseinheit gesteuert wird.

Die Erfindung betrifft weiterhin eine Verbrauchererkennungseinheit, die ein eigenes, Energie speicherndes Netzteil (39) und ein eigenes, die Übertragung der Daten mehrfach wiederholendes Steuerteil (32) aufweist.

FIG 2

**Beschreibung**

Die Erfindung betrifft ein Verfahren zum Austausch von Informationsdaten zwischen einem elektrischen Verbraucher und einem zwischen dem Verbraucher und dem elektrischen Versorgungsnetz angeordneten Betriebsmittel sowie eine Verbrauchererkennungseinheit zur Durchführung des Verfahrens.

Der Verbraucher enthält eine Verbrauchererkennungseinheit, die mindestens ein digitales Typenschild umfasst, das in einem elektronisch lesbaren Speichermittel gespeichert ist. Sie ist über eine Koppelimpedanz an die Versorgungsleitungen zwischen Verbraucher und elektrischem Versorgungsnetz angekoppelt ist, über die die Daten von einem Sender in der Verbrauchererkennungseinheit nach Initialisierung durch das Betriebsmittel mittels einer über der Netzfrequenz liegenden Trägerfrequenz auf die Spannung der Versorgungsleitungen aufmoduliert werden.

Die hier angesprochenen Verbraucher können elektrische Antriebsmaschinen oder andere drei- oder einphasige Verbraucher wie Magnetventile, Schalter etc. sein. Die Betriebsmittel, mit denen die Verbraucher kommunizieren sollen, können Stromrichter, (Wechsel/Drehstrom-)Steller, elektronische Schutzgeräte und ähnliche Einrichtungen sein, für die die Kenntnis von Daten der nachgeordneten Verbraucher wichtig ist.

Es ist bekannt, elektrische Antriebsmaschinen mit einem so genannten digitalen Typenschild zu versehen. So ist beispielsweise in der DE 197 30 492 A1 beschrieben, Informationen über die Antriebsmaschine, wie beispielsweise Typinformationen oder Inbetriebnahmeinformationen, in einer in der Antriebsmaschine angeordneten Speichereinheit abzuspeichern.

Das bietet den Vorteil, dass Informationen über die Antriebsmaschine durch Auslesen der Speichereinheit automatisierbar zur Verfügung stehen. Bei der aus DE 197 30 492 A1 bekannten Lösung ist vorgesehen, dass die in die Antriebsmaschine integrierte Speichereinheit mit einer eigenen Schnittstelle beziehungsweise einem eigenen Interface zur Kopplung mit einer Steuer- und/oder Regeleinheit versehen ist, wobei jedoch eine zusätzliche Verbindung, beispielsweise über ein serielles Bussystem, zwischen Antriebsmaschine und Steuer- und/oder Regeleinheit erforderlich ist.

Aus der DE 100 12 799 C2 ist ein drehzahlsteuerbarer Drehstrommotor zum Betrieb an einem Frequenzumrichter bekannt, wobei der Motor einen Speicherbaustein aufweist, in welchem die für den Umrichter relevanten Motordaten abgelegt sind. Der Umrichter umfasst eine Auswerteeinheit zum Auslesen des Speicherbausteines. Zum Herstellen einer Kommunikationsverbindung zwischen Speicherbaustein im Motor und Datenauswerteeinheit im Umrichter ist ebenfalls eine zusätzliche Signalleitung erforderlich, wobei die DE 100 12 799 C2 vorschlägt, hierzu vorhandene Resolver-Signalleitungen zu nutzen.

In DE 102 43 563 A1 wurde dagegen vorgeschlagen, die Informationen von einer Antriebsmaschine zu einem Steuergerät (Umrichter) oder dergleichen über eine der elektrischen Energieversorgung dienenden Zuleitung zu übertragen. Vorteilhaft kann so auf eine zusätzliche Datenleitung verzichtet werden. Die Initialisierung der Datenübertragung erfolgt durch das vorgeordnete Steuergerät ebenfalls über die Energieversorgungsleitungen, wobei für die Datenübertragung insbesondere ein spannungsloser Zustand der Zuleitungen genutzt wird. Als Koppeleinheit dient eine elektrische Spule oder eine kapazitive Kopplung zwischen den Adern.

Eine ähnliche Maßnahme ist aus DE 199 11 217 A1 bekannt, nach der die Informationen von einem Umrichter mit einer höheren Frequenz auf eine Versorgungsleitung aufmoduliert und zu mindestens einem weiteren Umrichter, Zentralrechner oder ähnlichem Gerät übertragen werden.

Der Erfindung liegt die Aufgabe zugrunde, ein Verfahren sowie eine geeignete Verbrauchererkennungseinheit anzugeben, mittels denen Informationsdaten zwischen einem elektrischen Verbraucher und einem zwischen dem Verbraucher und dem elektrischen Versorgungsnetz angeordneten Betriebsmittel mit größerer Sicherheit als bisher übertragen werden.

Erfindungsgemäß wird diese Aufgabe durch ein Verfahren mit den im Anspruch 1 sowie eine Verbrauchererkennungseinheit mit den im Anspruch 11 genannten Merkmalen gelöst. Zweckmäßige Ausgestaltungen sind Gegenstand der Unteransprüche.

Danach sieht das Verfahren folgende Schritte vor:

- während einer Verbrauchererkennungsphase zu Beginn einer jeweiligen Inbetriebnahme des Verbrauchers wird zunächst ein in der Verbrauchererkennungseinheit angeordnetes, Energie speicherndes Netzteil geladen,
- nach erfolgtem Laden des Netzteils werden in der Verbrauchererkennungseinheit gespeicherte Daten mit einem Datenburst an das zwischen Verbraucher und elektrischem Versorgungsnetz liegende Betriebsmittel übertragen,
- wobei die Übertragung mehrfach wiederholt wird,
- der Datenburst aus einer Präambel und den zu übertragenden Verbraucherdaten besteht und
- die Übertragung von einem Steuerteil der Verbrauchererkennungseinheit gesteuert wird.

Die Verbrauchererkennungseinheit enthält neben der Koppelimpedanz und dem Datenspeicherelement, zum Beispiel einem EEPROM, auch ein Netzteil und ein Steuerteil, beispielsweise einen Mikrokontroller oder eine entsprechende Steuerlogik. Zu Beginn der Verbraucheridentifikation wird zunächst das Netzteil der Verbrauchererkennungseinheit geladen (Ladebetrieb).

Nach dem Ladebetrieb sendet die Verbraucherkennungseinheit die gespeicherten Daten zu dem vorgeordneten Betriebsmittel, welches die Daten benötigt, beispielsweise ein Umrichter, von dem eine elektrische Antriebsmaschine versorgt wird, deren Daten an den Umrichter übermittelt werden. Durch ausreichende Dimensionierung eines Energiespeichers im Netzteil, zum Beispiel einem Kondensator, sendet der Mikrokontroller oder die Steuerlogik, die das Steuerteil der Verbrauchererkennungseinheit bilden, die Daten in einer festgelegten Zahl von Wiederholungen oder so lange aus, solange kein anderes Signal auf den Leitungen ist (Sendebetrieb) und die Energie zur Datenübertragung vorhanden ist.

Der Verzicht auf eine Kommunikation vom vorgeordneten Betriebsmittel zum Verbraucher reduziert die Kosten deutlich, da im Verbraucher nur ein Sender und kein Kommunikationsempfänger implementiert werden muss. Um ohne Wiederholanfrage-Protokoll (ARQ = Automatic Repeat Request), das bei unidirektionaler Kommunikation nicht implementiert werden kann, eine hohe Zuverlässigkeit der Datenübertragung zu gewährleisten, wird nach einer bevorzugten Ausbildung des Verfahrens folgendes Protokoll vorgeschlagen:

Der Datenburst wird automatisch so lange wiederholt, wie es die Energieversorgung des Senders erlaubt. Dabei kann bei jedem Sendeversuch die Trägerfrequenz neu gewählt werden. Mögliche Auswahlstrategien hierfür wären:

- ein Satz fester Frequenzen, die nacheinander verwendet werden.

Zum Beispiel wird bei einer Antriebsmaschine/Umrichter-Paarung aus der Kenntnis der von der Motornennleistung ungefähr gegebenen Streuinduktivität $L_M = L_{1\delta} + L'_{2\delta}$ die Koppelkapazität $C_K$ so gewählt, dass sich eine für alle Motoren gleiche Frequenz $f_M$ ergibt, bei der die Empfangsspannung ein Maximum bei minimaler Frequenz erreicht.

Diese Frequenz wird zum Beispiel zu $f_M$ = 60 kHz festgelegt. Damit ergibt sich $C_K$ zu:

$$C_K \;=\; 1 \;\; / \;\; 4\pi^2 f^2_M 2 L_M$$

- die zufällige Auswahl von Frequenzen in einem bestimmten Frequenzbereich
- die Regelung auf das Strommaximum im Sendefrequenzbereich, das heißt ein Durchprobieren bei aufsteigender Frequenz bis der Sendestrom maximal ist.

Alternativ dazu kann auch ein Frequenzscan durchgeführt werden, das heißt ein Durchprobieren bei aufsteigender Frequenz, bis die Empfangsspannung maximal wird. Das setzt aber wieder eine zusätzliche Datenleitung voraus, über die das Erreichen der maximalen Empfangsspannung an den Sender zurückgemeldet wird. Diese Datenleitung könnte allerdings dann auch für ein Einlesen von Daten in die Verbrauchererkennungseinheit genutzt werden.

Im Empfänger können die einzelnen Empfangssequenzen - auch wenn sie auf unterschiedlichen Frequenzen gesendet wurden - direkt miteinander kombiniert werden (maximum ratio combining), da immer gleicher Dateninhalt gesendet wird (Addition und Korrelation). So erzeugt dieses Sendeverfahren:

- eine Erhöhung des Rauschabstandes (SNR = Signal to Noise Ratio), da jede Wiederholung mit der bereits empfangenen Signalenergie kombiniert wird und somit das SNR mit jeder Wiederholung zunimmt (je nach Störumgebung sind unterschiedlich viele Wiederholungen notwendig, bis ein Telegramm mit ausreichender Zuverlässigkeit empfangen wurde. Deshalb sollte vorgesehen sein, dass auch Übertragungen, die als Reaktion auf mehrere Ladebursts gesendet wurden, im Empfänger kombiniert werden können);
- eine Frequenzvielfalt, da Wiederholungen auf anderen Frequenzen erfolgen, die anderen Ausbreitungsbedingungen und Störungen unterworfen sein können;
- Zeitverschiebungen, da sich die Übertragung inklusive Wiederholungen über einen relativ großen Zeitraum erstrecken können. Störer, die nur zu bestimmten Zeiten aktiv sind, verlängern nur die Dauer bis zum erfolgreichen Abschluss der Kommunikation, unterbinden diese aber nicht.

Die Datenübertragung erfolgt bevorzugt im spannungslosen Zustand der Versorgungsleitungen. Zuvor erfolgt durch das vorgeordnete Betriebsmittel eine Initialisierung und das Aufladen des Netzteils der Verbrauchererkennungseinheit. Zum Beispiel kann dazu ein Umrichter in einem Modus gestartet werden, der noch keine solche Spannung erzeugt, die zu einem Anlauf einer Antriebsmaschine führen würde. Anschließend wird ein spannungsloser Zustand hergestellt, bei dem die Datenübertragung erfolgt. Erst wenn die Verbraucherdaten fehlerfrei erkannt sind, geht der Umrichter in den normalen Betrieb über.

Die Datensicherung kann folgendermaßen erfolgen. Eine fehlervermeidende Kodierung (FEC = Forward error correction) ist für das Übertragungsprotokoll nicht sehr sinnvoll, da sie die Komplexität erheblich steigert, aber im Vergleich zu Wiederholungen nur wenig Effekt erzielt. Deshalb wird zur Datensicherung zweckmäßig eine an sich bekannte fehlererkennende Kodierung (Prüfsumme CRC = Cyclical Redundancy Check, md4, md5 = Message Digest Algorithm) eingesetzt, damit der Empfänger feststellen kann, wann die Übertragung erfolgreich war.

Besonders vorteilhaft ist es, eine fehlererkennende Kodierung zu wählen, die auf einem kryptologischen Algorithmus beruht. So kann die Authentizität der übertragenen Parameter überprüft werden. Eine Gefährdung von Mensch und Anlage durch den Betrieb mit falschen Parametern kann somit wirkungsvoll ausgeschlossen werden.

Der Datenburst besteht aus einer Präambel, die verschiedene Informationen enthalten kann. Sie soll es dem Empfänger zum Beispiel ermöglichen, die Sendefrequenz zu bestimmen. Sie kann außerdem zur Rahmensynchronisation dienen. Bei stark gestörter Übertragung oder schlechtem SNR ist es nämlich schwierig, den Beginn eines Datenbursts durch Auswertung der Präambel eindeutig zu erkennen. Dies ist jedoch wichtig, da durch die Überlagerung mehrerer identischer Datenbursts der Rauschabstand verbessert werden soll. Zu diesem Zweck kann das Umschalten auf eine alternative Sendefrequenz bei jeder Sendewiederholung zur Erkennung eines neuen Datenbursts herangezogen werden.

Da am Empfänger die Trägerfrequenz anhand der Präambel bestimmt werden kann, ist es möglich, durch die Wahl der Trägerfrequenz oder der Trägerfrequenzänderung weitere Informationen zu übertragen. Mögliche Anwendungen hierfür könnten sein:

- Signalisierung eines Wechsels des Telegramminhalts:
  Wird die Trägerfrequenz gewechselt, so beginnt der Empfänger die zum Übertragungsprotokoll beschriebene Kombination von aufeinander folgenden Telegrammen von neuem. Hiermit wird ermöglicht, dass das Verfahren auch für Telegramme mit wechselndem Dateninhalt funktioniert.
- Signalisierung eines Wechsels der Telegrammlänge:
  Wird die Trägerfrequenz gewechselt, so beginnt der Empfänger die Kombination von aufeinander folgenden Telegrammen von neuem. Hiermit wird ermöglicht, dass das Verfahren auch für Telegramme mit wechselnder Länge funktioniert.
- Signalisierung eines (analogen) Messwertes:
  Wird die Trägerfrequenz proportional zu einem im Verbraucher gemessenen Wert (zum Beispiel Motortemperatur) gewählt, so kann dieser Wert im Empfänger ermittelt werden.

Als Modulationsverfahren wird zweckmäßig $\pi/4$-DQPSK (DPSK = Differential Quadrature Phase Shift Keying) gewählt. Dieses Verfahren ist leicht zu implementieren und ist zum Beispiel im Vergleich zu FSK (FSK = Frequency Shift Keying) robust gegen Störungen. Im Vergleich zu herkömmlicher QPSK ist außerdem die notwendige Bandbreite geringfügig kleiner, da keine Signalübergänge durch den Nullpunkt im Basisband erfolgen.

Die Koppelimpedanz, das Netzteil und das Steuerteil inklusive des Speichermittels werden so ausgelegt, dass der normale Betrieb diesen nicht schadet (Normalbetrieb).

Um aufwändige Entzerrverfahren zu vermeiden, und gleichzeitig hohe Datenraten zu ermöglichen, kann zweckmäßig am empfangenden Betriebsmittel eine Filterung vorgenommen werden, um die Impulsantwort des Kanals zu verkürzen und so hohe Symbolraten bei geringer Intersymbolinterferenz zu ermöglichen.

Zweckmäßig kann die Koppelimpedanz in mehrere Elemente aufgeteilt werden, um Überspannungen/Überschläge zu vermeiden.

Die Koppelimpedanz wird zweckmäßig so dimensioniert, dass sie Hochpasseigenschaften hat und damit die Signalübertragung im Sendebetrieb begünstigt.

Als eine einfache Variante kann ein inkohärenter Empfänger gewählt werden. Über Verzögerungsdetektion kann dieser auf binäre Entscheidungen vereinfacht werden und stellt einen guten Kompromiss zwischen Aufwand und Leistungsfähigkeit dar.

Eine andere Möglichkeit, die auf eine breitere Basis an Messergebnissen im realen Umfeld zurückgreifen kann, ist, den Empfänger zu vereinfachen, um die Kosten zu senken (Empfang von $\pi/4$-DQPSK ist auch mittels eines Diskriminators möglich), oder die Leistungsfähigkeit des Empfängers zu erhöhen, indem die wesentlich aufwändigere kohärente Detektion verwendet wird.

Es kann eine Kooperation mit anderen elektronischen Typenschildern gewünscht sein. Um Fehlermöglichkeiten zu reduzieren und inkonsistente Daten zu vermeiden, werden elektronische Typenschilder für unterschiedliche Lesegeräte miteinander kombiniert beziehungsweise kommunizieren miteinander. Ist zum Beispiel ein berührungsloses Auslesen von Motorparametern in der Nähe eines Motors gewünscht, könnten die gespeicherten Daten über eine zusätzlich RFID-Schnittstelle (Radio-Frequenz-Identifikation) übertragen und mit handelsüblichen Lesegeräten ausgelesen werden.

Je nach Aufbau besitzt die Verbrauchererkennungseinheit dann entweder

- eine zusätzliche passive RFID-Schnittstelle (beispielsweise werden Motordaten in diesem Fall in der Motorerkennungseinheit gespeichert) oder
- sie verhält sich wie ein RFID-Lesegerät und kommuniziert mit einem im Verbraucher integrierten RFID-Datenträger. In diesem Fall werden die Daten im RFID-Datenträger gespeichert. Die Verbrauchererkennungseinheit liest diese Daten und sendet sie über die Energieversorgungsleitungen zum vorgeordneten Betriebsmittel.

Zur Reduzierung einer Störbeeinflussung durch Übersprechen kann zweckmäßig eine Filterung oder eine kapazitive Beschaltung zwischen den Phasen vorgesehen sein, mit der sich die unerwünschten Signalanteile reduzieren lassen.

Die Verbrauchererkennungseinheit kann bereits bei der Fertigung einer Verbrauchereinheit, zum Beispiel einer elektrischen Maschine, eingesetzt werden und dort zum Auslesen benötigter Einzel- und Komplettierungsteile für eine automatische Fertigung dienen.

Die Erfindung wird nachfolgend anhand eines Ausführungsbeispiels näher erläutert. In den zugehörigen Zeichnungen zeigen:

FIG 1    schematisch eine drehzahlsteuerbare elektrische Antriebsmaschine in Verbindung mit einem Umrichter und
FIG 2    die Ankopplung des Netzteils der Motorerkennungseinheit.

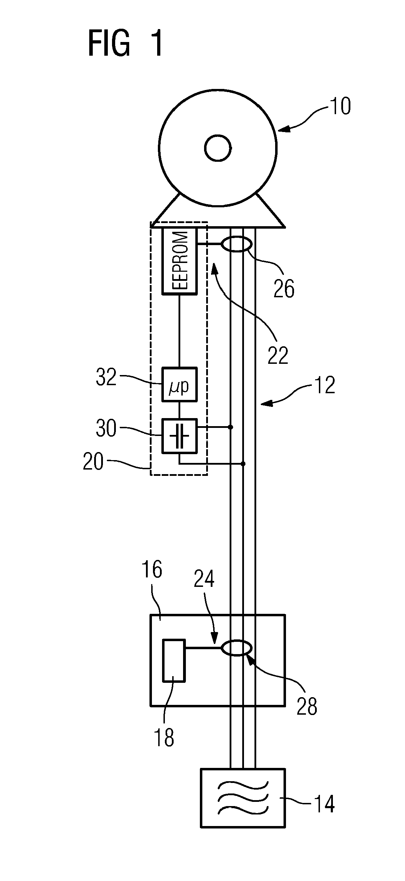

FIG 1 zeigt eine elektrische Antriebsmaschine 10, beispielsweise einen Drehstrommotor als Teil eines drehzahlveränderbaren Antriebes. Die Antriebsmaschine 10 ist über eine der elektrischen Energieversorgung dienende Zuleitung 12 mit einem Energieversorgungsnetz 14 verbunden. Der Antriebsmaschine 10 vorgeordnet ist ein Umrichter 16, der zur Frequenzänderung der Netzfrequenz des Energieversorgungsnetzes 14 in eine Antriebsfrequenz der Antriebsmaschine 10 dient. Die Steuerung des Umrichters 16 umfasst ein Steuergerät 18.

Aufbau und Wirkungsweise einer über einen Umrichter an einem Energieversorgungsnetz betriebenen elektrischen Antriebsmaschine sind allgemein bekannt, so dass hierauf im Rahmen der vorliegenden Beschreibung nicht näher eingegangen wird.

Zur Inbetriebnahme der Antriebseinheit erfolgt eine Parametrierung des Umrichters 16 auf die Antriebsmaschine 10. Hierzu sind in das Steuergerät 18 spezifische Motordaten der Antriebsmaschine 10 einzulesen. Diese Motordaten sind in einer Motorerkennungseinheit 20 in elektronisch lesbarer Form gespeichert, die dazu ein Speichermittel, üblicherweise ein EEPROM, enthält. Diese Informationsdaten beinhalten beispielsweise Ersatzschaltbilddaten der Antriebsmaschine 10, Leistungsparameter der Antriebsmaschine 10, Bestellnummer der Antriebsmaschine 10, Typbezeichnungen der Antriebsmaschine 10 oder dergleichen.

Sowohl die Motorerkennungseinheit 20 als auch das Steuergerät 18 sind über jeweils eine Koppelimpedanz 22 beziehungsweise 24 mit der Zuleitung 12 gekoppelt. Die Koppelimpedanzen 22 beziehungsweise 24 umfassen unter anderem eine elektromagnetische Spule 26 beziehungsweise 28, die wenigstens einer Phase der Zuleitung 12 zugeordnet ist.

Die Ankopplung kann auch über Kondensatoren oder drahtlos über nahe der Zuleitung 12 angeordnete Antennen erfolgen.

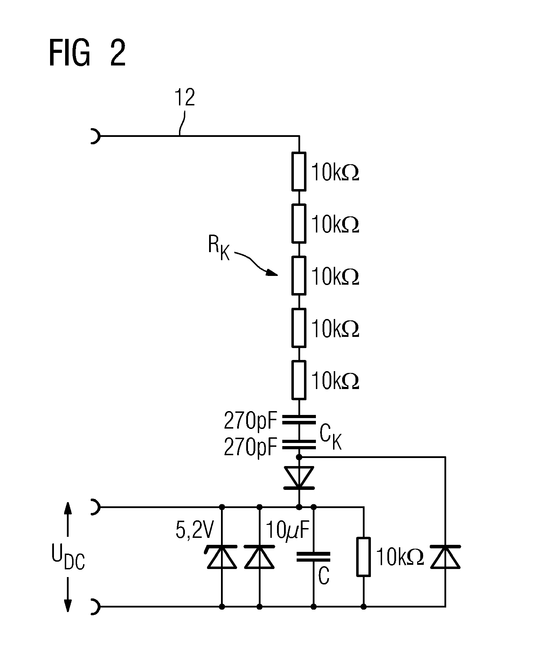

Einen Energiespeicher 30 der Motorerkennungseinheit zeigt FIG 2. Der Energiespeicher ist mit einer eigenen Koppelimpedanz, einem Zweipol, bestehend aus einer RC-Reihenschaltung von $R_K$ = 5 x 10 kΩ und $C_K$ = 2 x 270 pF an zwei Phasen der Motorzuleitung 12 angekoppelt und besteht aus einem Ladekondensator C = 100 pF.

Zur Steuerung der Datenübertragung ist in der Motorerkennungseinheit 20 ein Steuerteil 32 vorgesehen, das durch einen Mikroprozessor realisiert werden kann.

Zur Inbetriebnahme der Antriebseinheit wird mittels des Umrichters 16 zunächst der Ladekondensator C über zwei Phasen (Leitungen) mit einem burst bei voller Spannung (± 560 V) aufgeladen. Nach dem Laden des Ladekondensators C kann nunmehr durch das Steuerteil 32 das Auslesen der Informationsdaten aus der Motorerkennungseinheit 20 initiiert werden. Das Auslesen erfolgt über die Koppelimpedanz 22.

Die Koppelimpedanz 22 muss nach drei teilweise gegenläufigen Anforderungen dimensioniert werden:

- Ladebetrieb: genügend niederimpedant, damit eine schnelle Aufladung erfolgt;
- Sendebetrieb: genügend niederimpedant, damit ein möglichst hoher Signalpegel auf den Energieleitungen erreicht wird und das Empfangssignal sich aus den Störungen genügend hervorhebt;
- Normalbetrieb: genügend hochimpedant, damit die Motorerkennungseinheit geschützt wird und an der Koppelimpedanz nur wenig Verlustleistung entsteht.

Die Übertragung der Daten erfolgt durch Aufmodulieren auf eine Trägerfrequenz in einem Datenburst, bestehend aus einer Präambel und den eigentlichen Daten. Die Präambel ermöglicht das Senden auf beliebigen Trägerfrequenzen, zum Beispiel im Bereich zwischen 15 kHz und 100 kHz, ohne dass dem Empfänger die Trägerfrequenz vorher bekannt sein muss.

Die Dauer dieses Datenbursts, in dem nur die wenigen Bytes der Motorerkennung übertragen werden, könnte im Bereich weniger 100 ms liegen.

Die Daten werden am Empfänger (am Umrichter 16) gefiltert, um die Impulsantwort des Übertragungskanals zu verkürzen und so hohe Symbolraten bei geringer Intersymbolinterferenz zu ermöglichen. Als Beispiel wird ein RC-Bandpass erster Ordnung (Mittenfrequenz bei 50 kHz, 3 dB-Grenzfrequenz 15 kHz) eingesetzt, der die Impulsantwort des Übertragungskanals (50 m Motorkabel, 6 A-Drehstrommotor) auf weniger als 200 $\mu$s verkürzt.

Die Übertragung wird automatisch so lange wiederholt, wie es die Ladespannung des Ladekondensators C erlaubt, wobei die Trägerfrequenz bei jedem erneuten Senden innerhalb des vorgenannten Bereichs neu gewählt wird. Erst wenn die Daten fehlerfrei erkannt sind, geht der Umrichter 16 in einen Startbetrieb für die Antriebsmaschine 10 über.

**Patentansprüche**

1. Verfahren zum Austausch von Informationsdaten zwischen einem elektrischen Verbraucher und einem zwischen dem Verbraucher und dem elektrischen Versorgungsnetz angeordneten Betriebsmittel, wobei der Verbraucher eine Verbrauchererkennungseinheit enthält, die mindestens ein digitales Typenschild umfasst, das in einem elektronisch lesbaren Speichermittel gespeichert ist, und die über eine Koppelimpedanz an die Versorgungsleitungen zwischen Verbraucher und elektrischem Versorgungsnetz angekoppelt ist, über die die Daten von einem Sender in der Verbrauchererkennungseinheit nach Initialisierung durch das Betriebsmittel mittels einer über der Netzfrequenz liegenden Trägerfrequenz auf die Versorgungsleitungen aufmoduliert werden,
**dadurch gekennzeichnet, dass**

   - während einer Verbrauchererkennungsphase zu Beginn einer jeweiligen Inbetriebnahme des Verbrauchers zunächst ein in der Verbrauchererkennungseinheit angeordnetes, Energie speicherndes Netzteil geladen wird,
   - nach erfolgtem Laden des Netzteils in der Verbrauchererkennungseinheit gespeicherte Daten mit einem Datenburst an das zwischen Verbraucher und elektrischem Versorgungsnetz liegende Betriebsmittel übertragen werden,
   - wobei die Übertragung mehrfach wiederholt wird,
   - der Datenburst aus einer Präambel und den zu übertragenden Verbraucherdaten besteht und
   - die Übertragung von einem Steuerteil der Verbrauchererkennungseinheit gesteuert wird.

2. Verfahren nach Anspruch 1,
**dadurch gekennzeichnet, dass** die Trägerfrequenz fest vorgegeben und so gewählt wird, dass die Empfangsspannung ein Maximum erreicht.

3. Verfahren nach Anspruch 1,
**dadurch gekennzeichnet, dass** die Trägerfrequenz von dem Steuerteil der Verbrauchererkennungseinheit erhöht wird, bis der Sendestrom ein Maximum erreicht hat.

4. Verfahren nach Anspruch 1,
**dadurch gekennzeichnet, dass** die Trägerfrequenz in einem Frequenzscan so lange erhöht wird, bis die Empfangsspannung ein Maximum erreicht hat.

5. Verfahren nach einem der vorhergehenden Ansprüche,
**dadurch gekennzeichnet, dass** der Datenburst so lange wiederholt wird, wie die Energie des Netzteils ein Senden erlaubt.

6. Verfahren nach einem der vorhergehenden Ansprüche,
**dadurch gekennzeichnet, dass** die Trägerfrequenz bei jedem Sendevorgang von dem Steuerteil neu festgelegt wird.

7. Verfahren nach einem der vorhergehenden Ansprüche,
**dadurch gekennzeichnet, dass** die Daten kodiert werden.

8. Verfahren nach Anspruch 7,
**dadurch gekennzeichnet, dass** die Daten mit einem kryptologischen Algorithmus kodiert werden.

9. Verfahren nach einem der vorhergehenden Ansprüche,
**dadurch gekennzeichnet, dass** die Präambel des Datenbursts mit einer Information über die Höhe der Trägerfrequenz versehen wird.

10. Verfahren nach einem der vorhergehenden Ansprüche,
**dadurch gekennzeichnet, dass** die Höhe der Trägerfrequenz oder der Trägerfrequenzänderung als Informationsträger für Zusatzinformationen benutzt wird.

11. Verbrauchererkennungseinheit (20) für einen elektrischen Verbraucher (10), die mindestens ein digitales Typenschild umfasst, das in einem elektronisch lesbaren Speichermittel gespeichert ist, und deren Daten mittels Trägerfrequenzsignal von einem Sender nach Initialisierung durch ein dem Verbraucher (10) vorgeordnetes Betriebsmittel (16) über Koppelimpedanzen (22, 24) und die zwischen dem Verbraucher (10) und dem Betriebsmittel (16) liegenden Versorgungsleitungen (12) an das Betriebsmittel (16) übertragbar sind, zur Durchführung des Verfahrens nach einem der vorhergehenden Ansprüche,
**dadurch gekennzeichnet, dass** sie ein eigenes, Energie speicherndes Netzteil (39) und ein eigenes, die Übertragung der Daten mehrfach wiederholendes Steuerteil (32) aufweist.

12. Verbrauchererkennungseinheit nach Anspruch 11,
**dadurch gekennzeichnet, dass** der Energiespeicher des Netzteils (30) ein Ladekondensator (C) ist.

13. Verbrauchererkennungseinheit nach einem der Ansprüche 11 oder 12, **dadurch gekennzeichnet, dass** das Steuerteil (32) durch einen Mikrokontroller realisiert ist.

14. Verbrauchererkennungseinheit nach einem der Ansprüche 11 oder 12, **dadurch gekennzeichnet, dass** das Steuerteil (32) durch eine Logikschaltung realisiert ist.

15. Verbrauchererkennungseinheit nach einem der Ansprüche 11 bis 14, **dadurch gekennzeichnet, dass** die Koppelimpedanz jeweils in mehrere Impedanzen aufgeteilt ist.

16. Verbrauchererkennungseinheit nach einem der Ansprüche 11 bis 15, **dadurch gekennzeichnet, dass** das Netzteil (30) eine eigene Koppelimpedanz aufweist.

17. Verbrauchererkennungseinheit nach einem der Ansprüche 11 bis 16, **dadurch gekennzeichnet, dass** das Speichermittel ein nichtflüchtiges Datenspeicherelement ist.

18. Verbrauchererkennungseinheit nach einem der Ansprüche 11 bis 17, **dadurch gekennzeichnet, dass** sie mit einer RFID-Schnittstelle ausgerüstet ist.

# FIG 1

FIG 2